# NEW EUROPEAN PATENT SPECIFICATION

(11) **EP 0 374 739 B2**
(45) Date of publication and mention of the opposition decision: **10.01.1996**
(45) Mention of the grant of the patent: 11.08.1993
(21) Application number: 89123163.1
(22) Date of filing: 14.12.1989
(51) Int. Cl.: F04B 53/00, F04B 17/00, H02K 7/14

(54) **A motor pump unit for a high-pressure cleaner**
Motorpumpenaggregat für einen Hochdruckreiniger
Ensemble moto-pompe pour un nettoyeur haute pression

(30) Priority: 21.12.1988 DK 7150/88
(43) Date of publication of application: 27.06.1990
(73) Proprietor: K.E.W. INDUSTRI A/S, DK-9560 Hadsund (DK)
(72) Inventor: Ley, Johan, DK-9560 Hadsund (DK)
(74) Representative: Roerboel, Leif

(56) References cited:
- EP-A- 0 242 550
- EP-A- 0 242 550
- DE-A- 1 563 027
- DE-A- 2 146 290
- DE-U- 8 800 847
- DE-U- 8 804 272

## Description

### TECHNICAL FIELD

The present invention relates to a motor pump unit for a high-pressure cleaner, said unit comprising a pump and an electro-motor with a stator and a rotor in which the shaft is extended and designed to drive the pump.

### BACKGROUND ART

Previously, it has been commonly known to build up the stator and the rotor in a housing, usually provided with outside cooling ribs. The cooling necessary when loading the motor is thus achieved by heat dispersion from the relatively large surface area of the ribs to the relatively cold surroundings. Furthermore, it has been known to increase the cooling effect by blowing air across the ribs. An example of this is described in Danish Patent No. 149.218.

If the hitherto known methods of air-cooling are to be effective with regard to providing a large cooling effect, either relatively large cooling ribs are required, which would make the motor more expensive and call for more space, or else, as in the case of Danish Patent No. 149.218, both a blower and relatively large cooling surfaces are to be used just to ensure a sufficient cooling during the standstill periods of the pump.

DE-U-8804272 discloses a motor unit comprising a compressor and an electro-motor with a stator and a rotor, in which the rotor shaft is extended and designed to drive the compressor. Furthermore, this document shows, that the stator of the electro-motor is secured between an end cover and a crankcase placed directly on the stator pack, and, that said end cover and crankcase are mutually connected at their outer circumference by a number of releasable connecting elements placed in the direction of the circumference of the end cover and the crankcase and extending between these in the longitudinal direction of the motor, and, that the center of the end cover and the crankcase receive bearings for the rotor shaft.

The construction of DE-U-8804272 is furhter improved in DE-U-8800847 which refers to a high pressure cleaner having air passages formed in the end covers and employed for air cooling of the motor unit.

However, both of these constructions have borings in the end covers to receive the stator pack and the end covers are relatively large and space consuming due to the necessary cooling ribs and restrict the flow of air on the outside of the stator pack. Furthermore the disassembly and reassembly of the motor in case of repair e.g. to replace the bearings is rather complicated and time consuming due to the close fitting between the borings in the end covers and the stator pack.

In the case of motors for driving axial piston pumps of high-pressure cleaners the cooling capacity has been enhanced by letting a coolant flow in a circular jacket space around the motor housing, that is, the so-called liquid-cooling. Usually the cooling agent has been the pressure liquid used in the high-pressure cleaning. A construction of this kind is described in EP-OS 177.925.

However, liquid cooling of this type is a relatively complicated solution for cooling electro-motors, as an absolute encapsulation of the electric parts and a separation from the flowing liquid must be provided, this for reasons of safety. Moreover, a possible interruption of the coolant flow could cause damage to the motor.

### DISCLOSURE OF THE INVENTION

The object of the invention is to show a motor pump unit where the motor capacity is increased through improved air cooling.

According to the invention, this object is achieved by means of a motor pump unit in accordance with claim 1.

The use of end covers with recesses abutting the stator pack provides a more direct cooling of the stator, as the stator is not enclosed in a stator housing or partly enclosed in the end covers, the stator will be surrounded by a large volume of air which will only be restricted by an outer cover wrapping over the entire motor pump unit. The open construction with the two end covers results in a saving of materials compared to the constructions in which a coherent motor housing is used where the end covers form end walls. Furthermore, it is an advantage that the covers are placed directly on the stator and not on a stator housing or a stator wrapping, as in this way, stator and rotor mutually are more precisely aligned. Furthermore, by securing the covers by means of releasable connecting elements, for example conventional stay bolts, an advantage is obtained in case of later repair and maintenance as the covers can be dismantled separately, making it possible to replace, for instance, the bearings at the relevant shaft end without removing the rotor from the stator. The stator windings (18) extending from the stator pack (1) are cooled directly by the flowing cooling air on account of the air passages in the end covers. The stator windings in particular are strongly heated upon loading the motor and, therefore, the effect of direct coling through the open end is highly advantageous.

The one end cover is provided with an axially extending skirt designed to contain the prolonged rotor shaft and an oblique disc for an axial piston pump mounted on said shaft.

By this it is achieved that oil can be poured in the pump before the cylinder block of the pump is mounted, as the machine can be placed upright during the mounting. Thus, a more simple oil filling is obtained compared to the conventional filling through a small opening that afterwards has to be plugged.

According to the invention, the end of the rotor shaft in the direction away from the pump can be led through the end cover situated opposite and carry a blower on its free shaft end whereby the blower is placed under a cover wrapping extending over the complete motor pump unit.

In this manner, the possibility of increasing the cooling effect is achieved, as the blower can be designed to drive an air stream forward in a forced flow over the freely placed stator pack and the stator windings and further over the pump part in a circular space around the motor pump unit.

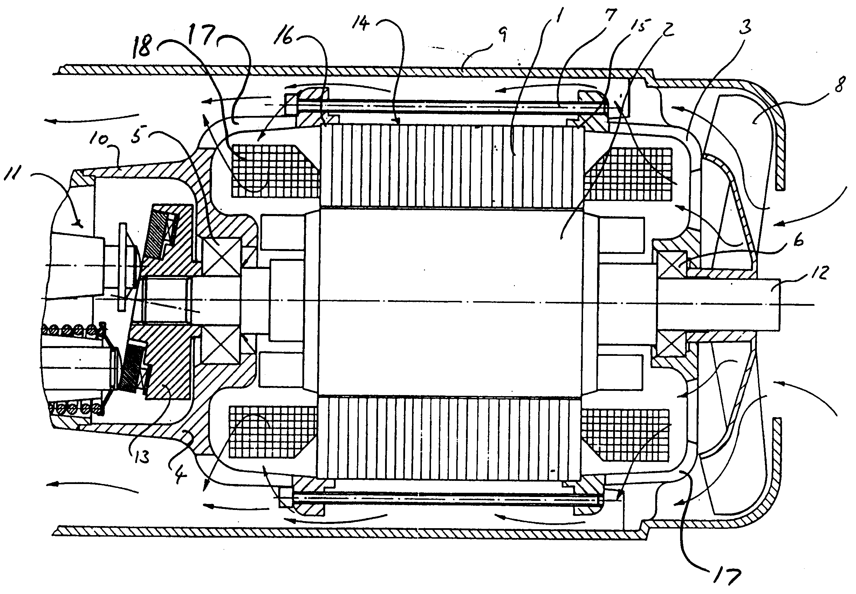

### BRIEF DESCRIPTION OF THE DRAWING

In the following the invention is described in detail with reference to the drawing showing a vertical cross-section through a motor pump unit designed according to the invention.

### DESCRIPTION OF THE PREFERRED EMBODIMENT

The electric motor comprises a stator 1 and a rotor 2 which are mutually secured by means of two open end covers 3 and 4. The end covers 3 and 4 contain recesses 15 and 16 extending along the circumference, said recesses abutting the stator pack 1. Conventional radial bearings 5 and 6 respectively are placed in the central area of the end covers. The end covers 3 and 4 are held together by means of a number of stay bolts 7, which are placed in flange-like projections on the covers at the peripherial area of same. The rotor shaft 12 is extended at its one end through the end cover 4 and led into the skirt part 10, protruding in the form of a bowl from the end of the end cover facing away from the oppositely situated end cover. An oblique disc 13 for an axial piston pump 11 is placed on the free rotor shaft.

At the end cover 3 facing away from the pump side the rotor shaft is led through the end cover and designed at its free end to carry a blower 8. The blower 8 is designed to blow an air stream over the stator 1 in the circular jacket space between the stator 1 and the outer cover wrapping 9 made of a relatively thin plate material.

In the end covers 3 and 4 air passages 17 are formed opposite the stator windings 18 protruding from the end areas of the stator pack 1.

On the drawing the whole electro-motor is designated by the reference number 14.

## Claims

1. A motor pump unit for a high-pressure cleaner comprising a pump (11) and
an electro-motor (14)
with a stator (1) and
a rotor (2),
in which the rotor shaft (12) is extended and designed to drive the pump (11),
the stator (1) of the electro-motor is secured between two end covers (3,4),
said end covers being mutually connected at their outer circumference by a number of releasable connecting elements (7) placed in the direction of the circumference of the covers and extending between these in the longitudinal direction of the motor, and
in which the centre of the end covers (3,4) receive bearings (5,6) for the rotor shaft (12),
air passages (17) are formed in the end covers (3,4) for circulation of air around the stator windings (18);
the two end covers 3,4) containing recesses (15,16) along the circumference,
which recesses (15,16) are abutting the stator pack (1) characterised in that
the pump is an axial piston pump,
the one end cover (4) near the pump is provided with a skirt (10)
which extends axially from the central part of the end cover (4)
inwardly of the air passages (17),
and which skirt (10) contains the extended rotor shaft (12) and an oblique disc (13) of the axial piston pump mounted on said shaft.

2. A motor pump unit according to claim 1, characterized in that the end of the rotor shaft (12) facing away from the pump (11) is led through the oppositely situated end cover (3) and carries a blower (8) on its free shaft end and thereby the blower is placed underneath a cover wrapping (9) extending over the complete motor pump unit.

## Patentansprüche

1. Motor-Pumpen-Einheit für Hochdruck-Reiniger mit einer Pumpe (11) und einem Elektromotor (14) mit einem Stator (1), einem Rotor (2) und einer zum Antrieb der Pumpe (11) ausgebildeten Rotorwelle (12), wobei der Stator (1) des Elektromotors zwischen zwei endseitigen Deckeln (3,4) festgelegt ist, die mit ihrem Aussenumfang durch mehrere lösbare Verbindungselemente (7) miteinander verbunden sind, welche in Umfangsrichtung der Deckel angeordnet sind und sich zwischen diesen in Motor-Längsrichtung erstrecken, und wobei im Mittelteil der Deckel (3,4) Lager (5,6) für die Rotorwelle (12) angeordnet sind; Luftkanäle (17) sind in den Deckeln (3,4) zur Luftzirkulation um die Statorwindungen (18) ausgebildet; die beiden Deckel (3,4) weisen Ausnehmungen (15,16) längs des Umfangs auf, die am Statorstoss (1) angrenzen, **dadurch gekennzeichnet,** dass die Pumpe eine axiale Kolbenpumpe ist, dass der eine Deckel (4) nahe an der Pumpe mit einer Einfassung (10) versehen ist, die sich axial von dem Mittenteil des Deckels (4) in die Luftkanäle (17) erstreckt und die verlängerte Rotorwelle (12) und eine schräg orientierte Scheibe (13) für die axiale Kolbenpumpe, die auf dieser Welle montiert ist, umgibt.

2. Motor-Pumpen-Einheit nach Anspruch 1, **dadurch gekennzeichnet,** dass das von der Pumpe (11) wegweisende Ende der Rotorwelle (12) durch den gegenüberliegend positionierten Deckel (3) hindurchgeführt ist und an seinem freien Endteil ein Gebläserad (8) trägt, das unter einer sich über die gesamte Motor-Pumpen-Einheit erstreckenden Abdeckung (9) angeordnet ist.

## Revendications

1. Ensemble moto-pompe pour un nettoyeur à haute pression comprenant une pompe (11) et un moteur électrique (14) avec un stator (1) et un rotor (2), dans lequel l'arbre de rotor (12) se prolonge et est conçu pour entraîner la pompe (11), le stator (1) du moteur électrique est fixé entre deux couvercles d'extrémité (3,4), lesdits couvercles d'extrémité étant reliés mutuellement au droit de leur circonférence extérieure par un certain nombre d'éléments de liaison démontables (7) placés dans la direction de la circonférence des couvercles et s'étendant entre eux dans la direction longitudinale du moteur, et dans lequel le centre des couvercles d'extrémité (3,4) reçoit des paliers (5,6) pour l'arbre de rotor (12), des passages d'air (17) sont formés dans les couvercles d'extrémité (3,4) pour une circulation d'air autour des enroulements de stator (18); les deux couvercles d'extrémité (3,4) contenant des évidements (15,16) le long de la circonférence, lesquels évidements (15,16) aboutissent à l'empilement de stator (1), **caractérisé** en ce que la pompe est une pompe à pistons axiaux, l'un des couvercles d'extrémité (4) près de la pompe est muni d'une chemise (10) qui s'étend axialement à partir de la partie centrale du couvercle d'extrémité (4) dans les passages d'air (17), et laquelle chemise (10) contient l'arbre de rotor (12) prolongé et un disque oblique (13) de la pompe à pistons axiaux montée sur ledit arbre.

2. Ensemble moto-pompe selon la revendication 1, **caractérisé** en ce que l'extrémité de l'arbre de rotor (12) tourné vers l'extérieur par rapport à la pompe (11) traverse le couvercle d'extrémité situé à l'opposé (3) et porte à ventilateur (8) sur son extrémité d'arbre libre et ce par quoi le ventilateur est placé sous un couvercle enveloppant (9) s'étendant sur tout l'ensemble moto-pompe.
